# EUROPÄISCHE PATENTSCHRIFT

(11) **EP 0 939 116 B1**
(45) Veröffentlichungstag und Bekanntmachung des Hinweises auf die Patenterteilung: **13.06.2001**
(21) Anmeldenummer: 99102380.5
(22) Anmeldetag: 08.02.1999
(51) Int. Cl.: C11B 13/00, C10M 175/00

(54) **Verfahren und Vorrichtung zur kontinuierlichen Aufarbeitung gebrauchter Pflanzen- und Esteröle**
Process and apparatus for the continuous treatment of vegetable and ester waste oils
Procédé et dispositif de traitement en continu d'huiles végétales et d'huiles d'esters usées

(30) Priorität: 16.02.1998 DE 19806208
(43) Veröffentlichungstag der Anmeldung: 01.09.1999
(73) Patentinhaber: Mostofizadeh Ghalamfarsa, Chahpar S.M., Prof. Dr.-Ing., 45257 Essen (DE)
(72) Erfinder: Mostofizadeh Ghalamfarsa, Chahpar S.M., Prof. Dr.-Ing., 45257 Essen (DE)

(56) Entgegenhaltungen:
- DE-A- 4 423 089
- DATABASE WPI Section Ch, Week 198712 Derwent Publications Ltd., London, GB; Class H08, AN 1987-084275 XP002130418 -& JP 62 036497 A (TOKUYAMA SODA KK), 17. Februar 1987 (1987-02-17)
- U.J. MÖLLER: "Ensorgungsmöglichkeiten für biologisch abbaubare Schmierstoffe" TRIBOLOGIE UND SCHMIERUNGSTECHNIK., Bd. 37, Nr. 4, 1990, Seiten 188--192, XP000878716 CURT R. VINCENTZ VERLAG, HANNOVER., DE ISSN: 0724-3472

## Beschreibung

Die Erfindung betrifft ein Verfahren und eine Vorrichtung zur kontinuierlichen Aufarbeitung gebrauchter Pflanzenöle.

Der Bedarf an Schmier- und Hydraulikölen mineralischer Herkunft beträgt europaweit mehrere Millionen Tonnen im Jahr mit steigender Tendenz. Gebrauchte Öle (Altöle machen ca. 50% der Frischöle aus, d.h., ca. 50% der eingesetzten Öle werden (durch Leckagen, Verdunstung, Zersetzung) an die Atmosphäre abgegeben. Wegen der schlechten biologischen Abbaubarkeit der Mineralöle bedeutet dies eine nicht unerhebliche Umweltbelastung. Ein Ersatz der Mineralöle durch biologisch abbaubare Pflanzenöle wie Rapsöl würde eine merkliche Entlastung der Umwelt bewirken, wenn eine Wiederverwertung gebrauchter Pflanzenöle realisiert werden könnte.

Nach dem Stand der Technik können gebrauchte Pflanzenöle durch Verbrennung in Sonderabfall-Verbrennungsanlagen oder in zugelassenen thermischen Anlagen zur Grundstoffproduktion (Zementwerke) verbrannt werden, sofern keine Vermischung mit Mineralölen vorliegt. Sonst greift die Altölverordnung. Die Verbrennung bedingt neben einer Umweltbelastung auch hohe Kosten. Weitere Entsorgungsverfahren betreffen die Umwandlung in einem Hydrocracker zur Gewinnung von Wasserstoff und die anaerobe Behandlung in einem Bioreaktor zur Methangewinnung. Wegen der in Pflanzen vorhandenen Sauerstoffverbindungen ist eine Umwandlung jedoch nur begrenzt möglich. Zudem bleiben nach einer anaeroben Umwandlung noch erhebliche Reststoffmengen übrig, die anderweitig entsorgt werden müssen.

Gebrauchte Pflanzenöle können auch durch Kurzwegdestillation im Hochvakuum (Drucke kleiner als 10⁻³ mbar) zum Teil zurückgewonnen werden. Diese Methode ist jedoch sowohl energetisch als auch apparativ sehr aufwendig und läßt sich nur im Labormaßstab problemlos anwenden.

Die "wertvollen", wieder verwendbaren Bestandteile von Pflanzenölen sind ungesättigte Fettsäuren, während gesättigte Fettsäuren eine Qualitätsminderung, z.B. durch Viskositätserhöhung bewirken. Die für ein Rückgewinnungsverfahren relevanten Zusammenhänge sollen am Beispiel von Rapsöl verdeutlicht werden. Rapsöl besteht im wesentlichen aus den ungesättigten Fettsäuren: Ölsäure, Linolsäure und Linolensäure. Als Triglyceride verfügen die ungesättigten Fettsäuren über eine Doppelbindung, die insbesondere Reaktionsfreudigkeit gegenüber Sauerstoff aufweist. Durch Oxidation entstehen gesättigte Fettsäuren. Auch Polymerisation mit anderen Molekülen und hydrolytische Reaktionen mit Wasser führen zur Umwandlung ungesättigter Fettsäuren. Diese chemischen Umwandlungen werden durch eine thermische Belastung begünstigt und sind häufig mit einer Viskositätserhöhung und damit auch mit einer Qualitätsverschlechterung (Alterung) des Pflanzenöls verbunden. Auch durch unsachgemäße Lagerung und Verwendung werden gelegentlich in Pflanzenölen Mineralölbestandteile gefunden, die bei einer Aufbereitung entfernt werden müssen.

Ein Analysenergebnis eines frischen und eines gebrauchten Rapsöls geht aus der folgenden Übersicht hervor:

| | **Frisches Öl** | **gebrauchtes Öl** |
|---|---|---|
| | | |
| Säurezahl (mg KOH/g Öl) | 0,48 | 1,58 |
| Viskosität (mm²/s) bei 40° C | ca. 36 | ca. 40 |
| In Petroliumbenzin unlösliche, oxidierte Fettsäuren (g/100g) | 0,1 | 0,21 |
| | | |

| Fettsäuren (%) | | |
|---|---|---|
| | | |
| Myristinsäure (14:0) | 0,2 | -- |
| Palmitinsäure (16:0) | 5,7 | 6,4 |
| Palmitolsäure (16:1) | 0,2 | 0,3 |
| Stearinsäure (18:0) | 1,7 | 2,4 |
| Ölsäure (18:1) | 68,4 | 63,9 |
| Linolsäure (18:2) | 18.1 | 17,3 |
| Linolensäure (18:3) | 4,2 | 6,2 |
| Eicosansäure (20:0) | 0,4 | 1,1 |
| Eicosensäure (20:1) | 1,0 | 1,6 |
| | | |
| Summe | 99,9 | 99,2 |

Nach dem Gebrauch des Pflanzenöls ist eine deutliche Erhöhung des Anteils an gesättigten Fettsäuren von 8,0 auf 9,9% zu erkennen. Ferner steigt der Anteil von in Petroliumbenzin unlöslichen, oxidierten Fettsäuren von 0,1 auf 0,21 (Polymerisation). Um wieder die ursprüngliche oder eine bessere Qualität zu erreichen, müssen die gesättigten Fettsäuren, aber auch Wasser und eventuell vorhandene Mineralölbestandteile, aus dem gebrauchten Pflanzenöl entfernt werden.

Der Erfindung liegt die Aufgabe zugrunde, ein Verfahren und eine Vorrichtung zur kontinuierlichen Entfernung von gesättigten Fettsäure, Mineralölbestsndteilen und Wasser aus gebrauchten Pflanzenölen zu schaffen, um hieraus einsatzfähige Schmier- und Hydrauliköle zu gewinnen.

Diese Aufgabe wird nach Anspruch 1 gelöst.

Der wesentliche Gedanke der Erfindung besteht darin, das gebrauchte Pflanzenöl im Verhältnis 1:2 mit einem Gemisch aus 90 Massen-% Aceton und 10 Massen-% Cyclopentan nach Durchströmen durch zwei Düsen in einem Mischbehälter bei hoher Turbulenz zu vermischen, um aufgrund unterschiedlicher Löslichkeiten eine 1. spezifisch leichtere Phase (reich an ungesättigten Fettsäuren) und eine 1. spezifisch schwerere Phase, (reich an gesättigten Fettsäuren und anderen Verunreinigungen) zu erhalten, welche anschließend durch Zentrifugal- und Schwerkraft voneinander getrennt und jeweils auf Temperaturen um 0 bis 4° C abgekühlt werden, wodurch die 1. spezifisch leichtere Phase in eine 2. spezifisch leichtere Phase (reich an Lösungsmitteln) und in eine 2. spezifisch schwerere Phase (reich an ungesättigten Fettsäuren) zerfällt, wobei letztere durch Eindampfung vom Lösungsmittel befreit wird und nach Abkühlung das Produkt (reich an ungesättigten Fettsäuren) bildet, während auch aus der 1. spezifisch schwereren Phase eine 3. spezifisch leichtere Phase (reich an Lösungsmittel) und eine 3. spezifisch schwerere Phase (reich an gesättigten Fettsäuren und Verunreinigungen) gebildet werden, wobei die 2. und 3. spezifisch leichtere Phase zusammengefaßt und nach Erwärmung in den oberen Teil einer Rektifizierkolonne eingeführt werden, in deren mittleren Teil dampfförmiges Lösungsmittel aus der Eindampfung hineinströmt und in deren unteren Teil die 3. spezifisch schwerere Phase eingeführt wird, um die gesättigten Fettsäuren sowie Verunreinigungen als Sumpfprodukt und das gereinigte Lösungsmittel als Kopfprodukt zu gewinnen, welches zur erneuten Verwendung in den Prozeßkreislauf zurückgeführt wird.

Weitere vorteilhafte Merkmale des erfindungsgemäßen Verfahrens gehen aus den Ansprüchen 2 bis 4 hervor.

Das beschriebene Verfahren ermöglicht die Rückgewinnung gebrauchter Pflanzenöle zu 90 bis 98%. Das zurückgewonnene Pflanzenöl enthält keine nennenswerten Mengen an gesättigten Fettsäuren, Mineralölen und Wasser. Es hat daher eine wesentlich bessere Qualität (für eine längere Gebrauchsdauer) als ein frisch hergestelltes Pflanzenöl, weil sich in letzterem naturgemäß bestimmte Anteile an gesättigten Fettsäuren befinden (s. bereits angegebene Zusammensetzungen).

Die unterschiedlichen Löslichkeiten (g/100g Lösung) der ungesättigten Fettsäure, Ölsäure, und der gesättigten Fettsäuren, Palmitin- und Stearinsäure, im verwendeten Lösungsmittel sind im folgenden angegeben:

| | | | | |
|---|---|---|---|---|
| Temperatur ° C | 20 | 0 | -20 | -30 |
| Palmitinsäure | | 0,66 | 0,10 | 0,04 |
| Stearinsäure | 1,5 | 0,11 | 0,01 | |
| Ölsäure | >70 | 50 | 5,2 | 1,68 |

Das Lösungsmittel nimmt die Ölsäure viel besser auf als die gesättigten Säuren, Palmitin- und Stearinsäure auf. Es nimmt außerdem keine Mineralöle auf, wohl aber das mitgeschleppte Wasser, welches durch Rektifikation abgetrennt wird.

Zur Durchführung des Verfahrens benutzt man eine Vorrichtung nach Anspruch 5.

Die Ausgestaltung der erfindungsgemäßen Vorrichtung sieht vor, daß das gebrauchte Öl und das Lösungsmittel gemeinsam durch eine Pumpe über zwei Düsen in einen Mischbehälter gefördert und dort bei hoher Turbulenz miteinander vermischt werden. Die Düsen schließen mit dem Deckel bündig ab. Ihre Achsen bilden miteinander einen Winkel von 60°.

Die durch unterschiedliche Löslichkeiten gebildete, 1. spezifisch leichtere Phase sowie die 1. spezifisch schwerere Phase liegen in Emulsionsform vor und werden zur Trennung zunächst durch einen tangentialen Eintritt in den zylindrischen Teil eines Phasentrennbehälters eingeführt, dem sich ein quaderförmiger Teil anschließt, in dem durch zwei am zylindrischen Teil oben und unten vorgesehenen Öffnungen die 1. spezifisch leichtere und die 1. spezifisch schwerere Phase tangential zum zylindrischen Teil hineinfließen. Hierdurch erfolgt im zylindrischen Teil eine Vortrennung durch Zentrifugalkräfte und im quaderförmigen Teil eine Vortrennung durch Schwerkraft. Diese Art der Phasentrennung findet auch im weiteren Verlauf des Verfahrens Anwendung.

Weitere vorteilhafte Merkmale der erfindungsgemäßen Vorrichtung resultieren aus den Ansprüchen 6 bis 10.

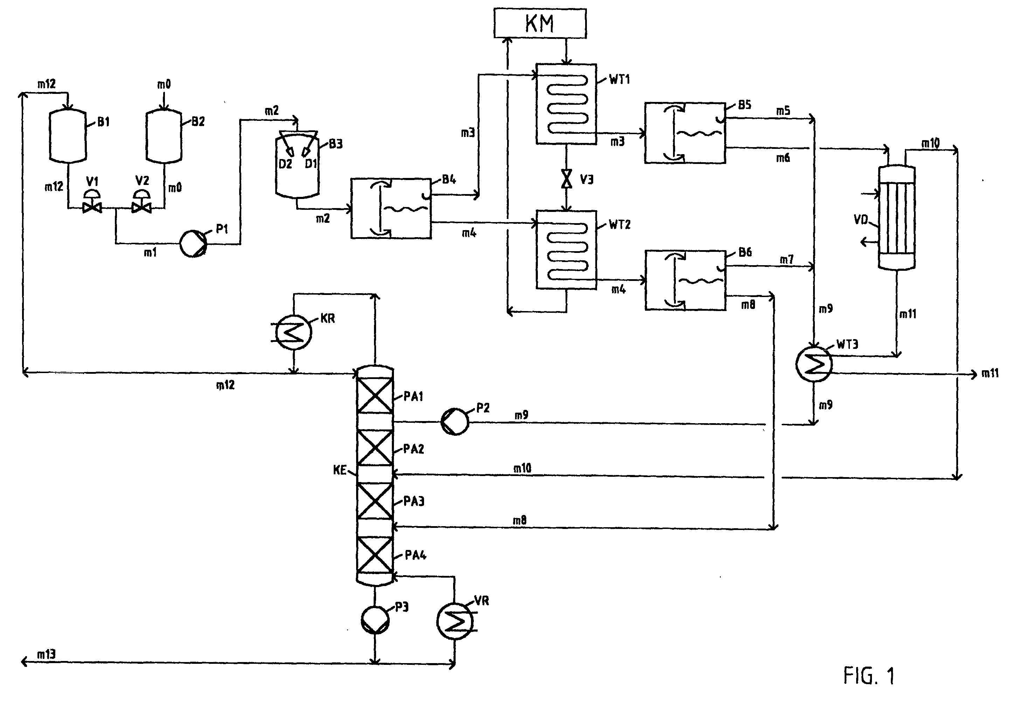

Ein Ausführungsbeispiel der Erfindung ist in den Figuren 1,2 und 3 dargestellt und wird im folgenden näher erläutert.

Es zeigen:
- Fig. 1 :: : Ablaufschema des erfindungsgemäßen Verfahrens und Funktionsweise der erfindungsgemäßen Vorrichtung
- Fig. 2 und 3 :: : Aufbau der wesentlichen Komponenten der erfindungsgemäßen Vorrichtung

Das gebrauchte Pflanzenöl m0 wird im Behälter B2 und das Lösungsmittel m12, das aus 90% Aceton und 10% Cyclopentan besteht, im Behälter B1 gelagert. Beide Massenströme m0 und m12 werden im Verhältnis m12/m0 von ca. 2 über die pneumatischen Ventile V2 und V1 durch die Pumpe P1 angesaugt, zu einem heterogenen Gemisch ml vereinigt und durch zwei Düsen D1 und D2 in den Mischbehälter B3 gefördert. Die Düsen D1 und D2 sind so ausgelegt, daß sich Austrittsgeschwindigkeiten von ca 15 m/s ergeben. Die dadurch erzeugten, freien Strahlen gewährleisten eine intensive Durchmischung des gebrauchten Pflanzenöls mit dem Lösungsmittel. Dabei werden vom Lösungsmittel überwiegend die ungesättigten Fettsäuren als wertvolle Komponenten aufgenommen und in eine 1. spezifisch leichtere Phase überführt. Gleichzeitig bildet sich eine 1. spezifisch schwerere Phase bestehend aus gesättigten Fettsäuren, eventuell vorhandenen Mineralölen und geringen Anteilen an Lösungsmittel. Der aus der Vermischung resultierende Massenstrom m2 am Austritt des Mischbehälters B3 enthält dann die 1. spezifisch leichtere und die 1. spezifisch schwerere Phase in Suspensionsform. Zur Trennung dieser Phasen tritt der Massenstrom m2 in den Phasentrennbehälter B4 ein und wird dort zunächst Zentrifugalkräften und anschließend Schwerkraft unterworfen. Es bilden sich zwei aufeinander geschichtete, homogene Phasen mit einer definierten, ebenen Phasengrenzfläche. Oben befindet sich die 1. spezifisch leichtere Phase, unten die 1. spezifisch schwerere Phase. Die 1. spezifisch leichtere Phase m3 enthält überwiegend ungesättigte Fettsäuren und Lösungsmittel und wird oben aus dem Phasentrennbehälter B4 abgeführt. Die 1. spezifisch schwerere Phase m4 mit gesättigten Fettsäuren, Mineralölen und geringen Mengen Lösungsmittel wird unten aus dem Phasentrennbehälter B4 abgeführt. Zu einer ersten Trennung des Lösungsmittels von ungesättigten Fettsäuren wird der Massenstrom m3 im Wärmetauscher WT1 auf eine Temperatur von ca. 4° C abgekühlt. Die Bereitstellung des Kühlmittels erfolgt durch die Kältemaschine KM. Durch Abkühlung nimmt die Löslichkeit ab, es bilden sich eine 2. spezifisch leichtere, lösungsmittelreiche Phase und eine 2. spezifisch schwerere, lösungsmittelarme Phase in Suspensionsform. Die Trennung dieser Phasen vollzieht sich im Phasentrennbehälter B5 unter Einwirkung von Zentrifugal- und Schwerkraft (ähnlich wie im Phasentrennbehälter B4). Oben wird die lösungsmittelreiche Phase, die 2. spezifisch leichtere Phase m5, abgezogen. Unten tritt die mit ungesättigten Fettsäuren angereicherte Phase, die 2. spezifisch schwerere Phase m6 aus. Zur Abtrennung des restlichen Lösungsmittels wird m6 im nachgeschalteten Verdampfer VD eingedampft, so daß die nahezu lösungsmittelfreie Phase m11 und der Lösungsmitteldampf m10 entstehen. Nach Abkühlung im Wärmetauscher WT3 bildet m11 das Produkt und kann als aufbereitetes Öl verwendet werden. Der Lösungsmitteldampf m10 wird zur Reinigung in die Rektifizierkolonne KE zwischen der zweiten Packung PA2 und der dritten Packung PA3 eingeführt. Der Verdampfer VD ist vorzugsweise als Fallstromverdampfer ausgebildet. Die mit ungesättigten Fettsäuren angereicherte Phase m6 wird auf die Rohre des Verdampfers VD verteilt, um dünne Rieselfilme zu erzeugen, aus denen das Lösungsmittel durch Wärmezufuhr ausgetrieben, im Gegenstrom zu diesen geführt und oben abgezogen wird. Die lösungsmittelfreie Phase m11 tritt unten aus. Der Verdampfer VD wird vorzugsweise bei 95° C und 800 mbar absolut betrieben.

Die im Phasentrennbehälter B4 getrennte, 1. spezifisch schwerere Phase m4 enthält neben Lösungsmittel gesättigte Fettsäuren, Wasser, feste Verunreinigungen und eventuell auch Mineralöle. Zur Rückgewinnung des Lösungsmittels wird die 1. spezifisch schwerere Phase m4 unten entnommen, im Wärmetauscher WT2, der mit dem Kühlkreislauf der Kältemaschine KM verbunden ist, auf 0° C abgekühlt und in den Phasentrennbehälter B6 eingeführt. Durch Abkühlung nimmt die Löslichkeit der gesättigten Fettsäuren im Lösungsmittel ab, und es bilden sich eine 3. spezifisch leichtere Phase, reich an Lösungsmittel, und ein 3. spezifisch den sich eine 3. spezifisch leichtere Phase, reich an Lösungsmittel, und ein 3. spezifisch schwerere Phase, reich an gesättigten Fettsäuren und Verunreinigungen. Diese Phasen werden im Phasentrennbehälter B6 durch Einwirkung von Zentrifugal- und Schwerkraft getrennt (ähnlich wie im Phasentrennbehälter B4). Die 3. spezifisch leichtere Phase m7 wird oben abgezogen und mit dem ebenso lösungsmittelreichen Massenstrom m5 zum Massenstrom m9 vereinigt, welcher nach Erwärmung im Wärmetauscher WT3 (durch Wärmeaufnahme vom Massenstrom m11) zwecks weiterer Reinigung durch die Pumpe P2 in die Rektifizierkolonne KE zwischen der 1. Packung PA1 und der 2. Packung PA2 eingeleitet wird. Die 3. spezifisch schwerere Phase m8 gelangt ebenso zur Abtrennung des Lösungsmittels in die Rektifizierkolonne KE zwischen der 3. Packung PA3 und der 4. Packung PA4. In der Rektifizierkolonne KE ist das Lösungsmittel der Leichtsieder, welcher am Kopf nach der Kondensation im Kondensator KR als Kopfprodukt m12 abgezogen und im Behälter B1 zur Kreislaufführung gesammelt wird.

Die Rektifikation gewährleistet die gewünschte Reinheit des Lösungsmittels. Durch Unterteilung in bestimmt Abschnitt zwischen den Packungen PAI bis PA4 für die Massenströme m8, m9, m10 mit unterschiedlichen Reinheiten wird einerseits eine effektive Reinigung des Lösungsmittels (Kopfprodukt) erreicht, andererseits werden sämtliche Stoffe (gesättigte Fettsäuren, Mineralöle, Wasser), die als Störstoffe gelten, als Sumpfprodukt m13 gewonnen und über die Pumpe P3 abgezogen. Diese können z.B. in einem Hydrocracker weiter verarbeitet werden. Die Versorgung der Kolonne KE mit Wärme erfolgt durch den Verdampfer VR. Die Kolonne wird vorzugsweise bei 90° C Sumpftemperatur und 780 mbar absolut Kopfdruck betrieben.

Vorzugsweise werden folgende Parameter zur Durchführung des Verfahrens eingestellt:
- Massenverhältnis gebrauchtes Öl zum Lösungsmittel (m0/m12) = 0,5
- Mischtemperatur nach dem Mischbehälter 25-30° C
- Massenverhältnis der 1. spezifisch leichteren Phase zur
   1. spezifisch schwereren Phase (m3/m4) = 19
- Massenzusammensetzung des Lösungsmittels in der
   1. spezifisch leichteren Phase 26,5%
- Massenzusammensetzung des Lösungsmittels in der
   1. spezifisch schwereren Phase 32% 800 mbar abs.
- Betriebsbedingungen in der Rektifizierkolonne KE:
   Sumpftemperatur 90° C;
   Kopfdruck 780 mbar abs.

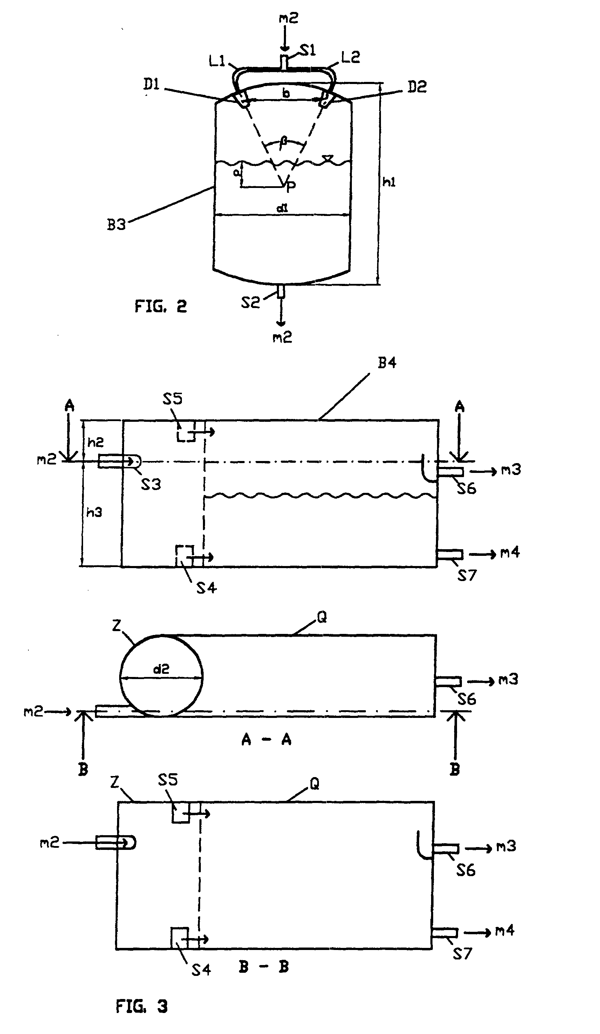

Fig. 2 und Fig. 3 zeigen die weitere Ausgestaltung der erfindungsgemäßen Vorrichtung. In Fig. 2 ist der Aufbau des Mischbehälters B3 dargestellt. Der Massenstrom m2, bestehend aus dem gebrauchten Pflanzenöl und dem Lösungsmittel, wird oben mittig durch den Stutzen S1 über die Abzweige L1 und L2 eingeführt, an deren Enden die Düsen D1 und D2 mit einem Achswinkel von β = 60° C angebracht sind. Die Düsen schließen mit dem Deckel bündig ab. Durch die Düsen D1 und D2 strömt der Massenstrom m2 mit einer Austrittsgeschwindigkeit von ca. 15 m/s und bildet zwei konzentrische aufeinander treffende Strahlen mit hohem Impuls. Der Flüssigkeitsspiegel befindet sich oberhalb des Schnittpunktes P der Düsenachsen. Das Auftreffen der beiden Strahlen erzeugt eine hohe Turbulenz und dadurch eine intensive Durchmischung. Es bildet sich eine Emulsion, die unten durch den Stutzen S2 abgezogen wird. Die Verweilzeit im Mischbehälter B3 soll ca. 3 Minuten betragen. Für den Mischbehälter B3 werden folgende geometrischen Verhältnisse bevorzugt:
- Behälterhöhe zum Behälterdurchmesser (h1/d1) = 1,5
- Düsenabstand zum Behälterdurchmesser (b/d1) = 0,75
- Abstand des Schnittpunktes P der Düsenachsen von der FlüssigkeitsOberfläche zum Düsenabstand (a/b) = 0,25

Fig. 3 zeigt den Aufbau des Phasentrennbehälters B4, welcher aus einem vorderen zylindrischen Teil Z mit einem daran anschließenden quaderförmigen Teil Q besteht. Der aus dem Mischbehälter B3 austretende Massenstrom m2, der in Emulsionsform vorliegt, tritt mit einer Geschwindigkeit von ca. 2 m/s durch den tangentialen Stutzen S3 in den zylindrischen Teil Z zwecks einer Vorabscheidung ein. Die 1. spezifisch schwerere Phase sammelt sich überwiegend an der zylindrischen Wand und im unteren 2/3, sie verläßt den zylindrischen Teil tangential durch die untere, mit dem Boden abschließende Öffnung S4 und gelangt nahe des Bodens in den quaderförmigen Teil Q. Die 1. spezifisch leichtere Phase sammelt sich überwiegend im oberen 1/3 und in der Mitte des zylindrischen Teils Z. Sie tritt tangential durch die Öffnung S5 aus dem zylindrischen Teil Z aus und gelangt nahe des Deckels in den quaderförmigen Teil Q, in dem eine weitere Trennung durch Schichtenbildung vollzogen wird. Die förmigen Teil Q, in dem eine weitere Trennung durch Schichtenbildung vollzogen wird. Die Tangentialgeschwindigkeit in den Öffnungen S4 und S5 beträgt ca.0,3 m/s. Die Verweilzeit im quaderförmigen Teil liegt bei ca. 10 Minuten. Die 1. spezifisch leichtere Phase m3 verläßt den quaderförmigen Teil durch den Stutzen S6, während die 1. spezifisch schwerere Phase durch den Stutzen S7 abgezogen wird. Für den Phasentrennbehälter B4 werden folgende geometrische Maße bevorzugt:
- Abstand Stutzen S3 zum Boden zum Abstand von S3 zum Deckel
   (h3/h2) = 2
- Durchmesser des zylindrischen Teils zur Höhe des zylindrischen
   Teil [d2(h2+h3)] = 0,67

Die Phasentrennbehälter B5 und B6 sind ähnlich wie B4 ausgeführt.

## Patentansprüche

1. Verfahren zur kontinuierlichen Aufarbeitung gebrauchter Pflanzenöle, gekennzeichnet durch folgende Merkmale:
a) das gebrauchte Pflanzenöl m0 wird gemeinsam mit dem Lösungsmittel m12, bestehend aus 90% Aceton und 10% Cyclopentan, im Verhältnis (m0/m12) = 0,5, mit einer Pumpe P1 durch zwei Düsen D1 und D2 gefördert, welche Freistrahlen mit hohem Impuls erzeugen, die in einem Mischbehälter B3 durch Auftreffen auf die Flüssigkeitsoberfläche für eine intensive Durchmischung des gebrauchten Pflanzenöls mit dem Lösungsmittel sorgen, so daß eine Emulsion m2, bestehend aus einer 1. spezifisch leichteren Phase, reich an ungesättigten Fettsäuren, und einer 1. spezifisch schwereren Phase, reich an gesättigten Fettsäuren und Verunreinigungen, gebildet wird;
b) die Emulsion m2 wird in einem Phasentrennbehälter B4 zunächst durch Zentrifugal- und anschließend durch Schwerkraft in die 1. spezifisch leichtere Phase m3 und in die 1. spezifisch schwerere Phase m4 getrennt, erstere wird in einem Wärmetauscher WT1 auf eine Temperatur von ca. 4° C gekühlt, wodurch aus dieser eine 2. spezifisch leichtere Phase (reich an Lösungsmittel) und eine 2. spezifisch schwerere Phase (reich an ungesättigten Fettsäuren) gebildet werden, welche in einem Phasentrennbehälter B5 durch Zentrifigual- und Schwerkraft voneinander getrennt werden,
c) die 2. spezifisch schwerere Phase m6 wird in einem Fallstromverdampfer VD im Gegenstrom zum durch Wärmezufuhr ausgetriebenen Lösungsmittel m10 eingedampft, in einem Wärmetauscher WT3 gekühlt und als Produkt m11 abgeführt;
d) die 1. spezifisch schwerere Phase m4 wird in einem Wärmetauscher WT2 auf ca. 0°C gekühlt, wodurch aus dieser eine 3. spezifisch leichtere Phase (reich an Lösungsmittel) und eine 3. spezifisch schwerere Phase (reich an gesättigten Fettsäuren und Verunreinigungen) gebildet werden, welche in einem Phasentrennbehälter B6 unter Einwirkung von Zentrifugal- und Schwerkraft voneinander getrennt werden;
e) die 2. spezifisch leichtere Phase m5 und die 3. spezifisch leichtere Phase m7 werden zu einem Massenstrom m9 zusammengefaßt und nach Wärmeaufnahme vom Produkt m11 im Wärmetauscher WT3 mittels einer Pumpe P2 in eine Rektifizierkolonne KE zwischen einer 1. Packung PA1 und einer 2. Packung PA2 (vom Kolonnenkopf gezählt ) eingeführt, während der im Fallstromverdampfer VD ausgetriebene Lösungsmitteldampf m10 zwischen einer 2.Packung PA2 und einer 3.Packung PA3 und die 3. spezifisch schwere Phase m8 zwischen einer 3. Packung PA3 und einer 4. Packung PA4 in die Kolonne KE eingeführt werden, welche über einen Verdampfer VR beheizt wird;
f) das Sumpfprodukt m13 (gesättigte Fettsäuren und Verunreinigungen) wird mit Hilfe einer Pumpe P3 abgezogen, während das in einem Kopfkondensator KR kondensierte Kopfprodukt m12, welches aus gereinigtem Lösungsmittel besteht, in den Kreislauf zurückgeführt wird.

2. Verfahren nach Anspruch 1, dadurch gekennzeichnet, daß die Temperatur des gereinigten Lösungsmittels m12 so eingestellt wird, daß sich nach Vermischung mit dem gebrauchten Pflanzenöl m0, im Verhältnis (m0/m12) = 0,5, eine Temperatur von 25 bis 30° C ergibt.

3. Verfahren nach Anspruch 1, dadurch gekennzeichnet, daß der Fallstromverdampfer VD bei 95° C und 800 mbar (absolut) und die Rektifizierkolonne KE bei 90° C Sumpftemperatur und 780 mbar (absolut) Kopfdruck betrieben wird.

4. Verfahren nach Anspruch 1, dadurch gekennzeichnet, daß die Kühlung der 1. spezifisch leichteren Phase m3 im Wärmetauscher WT1 und die Kühlung der 1. spezifisch schwereren Phase m4 im Wärmetauscher WT2 in der genannten Reihenfolge über einen Kühlkreislauf erfolgen, welcher durch eine Kältemaschine aufrechterhalten wird.

5. Vorrichtung zur Durchführung des Verfahren nach Anspruch 1, bestehend aus einem Sammelbehälter B1 für das Lösungsmittel m12 (90% Aceton + 10% Cyclopentan) und einem Sammelbehälter B2 für das gebrauchte Pflanzenöl m0, einem Mischbehälter B3 zur Vermischung des Lösungsmittels mit dem gebrauchten Pflanzenöl, einem Phasentrennbehälter B4 für die Trennung der resultierenden Emulsion m2 in eine 1. spezifisch leichtere Phase m3 und in eine 1. spezifisch schwerere Phase m4, einem Wärmetauscher WT1 zur Kühlung der 1. spezifisch leichteren Phase m3, einem Wärmetauscher WT2 zur Kühlung der 1. spezifisch schweren Phase m4, einem Phasentrennbehälter B5 zur Trennung einer 2. spezifisch leichteren Phase m5 von einer 2. spezifisch schwereren Phase m6, einem Phasentrennbehälter B6 zur Trennung einer 3. spezifisch leichteren Phase m7 von einer 3. spezifisch schwereren Phase m8, einem Fallstromverdampfer VD zur Eindampfung der 2. spezifisch schwereren Phase m6, einem Wärmetaucher WT3 zur Kühlung des gebildeten Produktes m11, einer Rektifizierkolonne KE mit dem Verdampfer VR und dem Kondensator KR und einer Pumpe P3 zur Ausschleusung der gesättigten Fettsäuren und Verunreinigungen m13, dadurch gekennzeichnet, daß die Behälter B1 und B2 über eine Rohrvereinigung an eine zur Verbindung mit dem Mischbehälter B3 vorgesehene Leitung angeschlossen sind, welche über zwei Abzweige L1 und L2 mit zwei Düsen D1 und D2 verbunden ist und in die eine Pumpe P1 zur gemeinsamen Förderung des Lösungsmittels und des gebrauchten Pflanzenöls eingebaut ist, und daß der Mischbehälter über eine Leitung mit einem tangentialen Stutzen S3 des Phasentrennbehälters B4 verbunden ist, welcher aus einem zylindrischen Teil Z zur Erzeugung von Zentrifugalkräften und einem quaderförmigen Teil Q zur Einwirkung von Schwerkraft besteht, wobei der quaderförmige Teil über einen oberen Stutzen S6 und eine Leitung mit einem Wärmetauscher WT1 und über einen unteren Stutzen S7 mit einem Wärmetauscher WT2 verbunden ist, deren Austritte für die gekühlten Massenströme m3 und m4 jeweils mit den Phasentrennbehältern B5 und B6 (ähnlich ausgeführt wie B4) verbunden sind, deren obere Austrittsstutzen in eine gemeinsame Leitung zur Verbindung mit dem Wärmetauscher WT3 münden, dessen Austritt über eine Leitung, in die eine Pumpe P2 zur Förderung des aus m5 und m7 resultierenden Massenstromes m9 eingebaut ist, mit einer Rektifizierkolonne KE verbunden ist, während der untere Autrittsstutzen von B5 mit dem Fallstromverdampfer VD verbunden ist, der einerseits durch eine Leitung für den Lösungsmitteldampf m10 mit der Rektifizierkolonne KE und andererseits durch eine Leitung für das zu kühlende Produkt m11 mit dem Wärmetauscher WT3 verbunden ist, und daß der untere Austrittsstutzen von B6 zum Transport der 3. spezifisch schweren Phase m8 mit der Rektifizierkolonne KE in Verbindung steht, welche über den Kondensator KR mit dem Sammelbehälter B1 zur Bevorratung des Lösungsmittels verbunden ist.

6. Vorrichtung nach Anspruch 5, dadurch gekennzeichnet, daß für den Mischbehälter B3 das Verhältnis Behälterhöhe/Behälterdurchmesser, (h1/d1), 1,5; das Verhältnis Düsenabstand am Deckel/Behälterdurchmesser, (b/d1), 0,75, das Verhältnis des Abstands des Schnittpunktes P der Düsenachsen von der Flüssigkeitsoberfläche / Düsenabstand, (a/b), 0,25, der Winkel zwischen den Düsenachsen 60° und die Verweilzeit 3 Minuten beträgt.

7. Vorrichtung nach Anspruch 6, dadurch gekennzeichnet, daß die Querschnitte der Düsen D1 und D2 so bemessen sind, daß sich eine Austrittsgeschwindigkeit von 15 m/s ergibt.

8. Vorrichtung nach Anspruch 5, dadurch gekennzeichnet, daß der Phasentrennbehälter B4 einen zylindrischen Teil Z mit einem tangentialen Stutzen S3 und einem quaderförmigen Teil Q mit zwei Austrittsstutzen S6 und S7 besitzt, wobei am zylindrischen Teil zwei Öffnungen S5 (mit dem Deckel abschließend) und S4 (mit dem Boden abschließend) zum Durchtritt einer spezifisch leichteren Phase (oben) und einer spezifisch schwereren Phase (unten) vom zylindrischen Teil Z zum quaderförmigen Teil Q vorgesehen sind.

9. Vorrichtung nach Anspruch 8, dadurch gekennzeichnet, daß der Stutzen S3 für eine Geschwindigkeit von 2 m/s, die Öffnungen S4 und S5 für eine Geschwindigkeit von 0,3 m/s und der quaderförmige Teil Q für eine Verweilzeit von 10 Minuten ausgelegt sind.

10. Vorrichtung nach Anspruch 6, dadurch gekennzeichnet, daß für den Phasentrennbehälter B4 das Verhältnis des Abstandes h3 des Stutzens S3 vom Boden zum Abstand h2 des Stutzens S3 vom Deckel (h3/h2) 2 und das Verhältnis des Durchmessers d2 des zylindrischen Teils Z zur Höhe des zylindrischen Teils h2+h3 [d2/(h2+h3)]0,67 beträgt.

## Claims

1. Process for continuous treatment of used vegetable oils, characterized by the following features:
a) The used vegetable oil m0 is supplied, along with the solvent m12, consisting of 90% acetone and 10% cyclopentane in the ratio (m0/m12) = 0.5, by a pump P1 across two nozzles D1 and D2, which will produce high-pulsed free jets, which will lead to intensive mixing of the used vegetable oil with the solvent in a mixing container B3 when the jets reach the liquid surface, thus forming an emulsion m2, consisting of a first specifically lighter phase which is rich in unsaturated fatty acids, and a first specifically heavier phase which is rich in saturated fatty acids and impurities;
b) In a phase separating tank B4, the emulsion m2 is separated by centrifugal force and then by gravity into the first specifically lighter phase m3 and into the first specifically heavier phase m4, the first will be cooled down to a temperature of approx. 4°C in a heat exchanger WT1, thus forming from this phase both a second specifically lighter phase which is rich in solvents, and a second specifically heavier phase which is rich in unsaturated fatty acids, which will then be separated from each other in a phase separating tank B5 by centrifugal and gravity force,
c) the second specifically heavier phase m6 is concentrated in a downdraft evaporator VD in inverse current to the solvent m10 which is expelled by heat addition, cooled down in a heat exchanger WT3 and discharged as the product m11;
d) the first specifically heavier phase m4 is cooled down to approx. 0°C in a heat exchanger WT2, thus forming from this phase a third specifically lighter phase (rich in solvents) and a third specifically heavier phase (rich in saturated fatty acids and impurities), which are separated from each other in a phase separating tank B6 by application of centrifugal and gravity forces;
e) the second specifically lighter phase m5 and the third specifically lighter phase m7 are combined to a mass flow m9 and introduced, after heat absorption from product m11 in the heat exchanger WT3 by a pump P2 into a stripping column KE between a first pack of PA1 and a second pack PA2 (counted from the column head), while the solvent vapour m10 which has been expelled in the downdraft evaporator VD is introduced into the column KE which is heated over an evaporator VR, between a second pack PA2 and a third pack PA3, and the third specifically heavier phase m8 is introduced into this column between a third pack PA3 and a fourth pack PA4;
f) the sump product ml 3 (saturated fatty acids and impurities) is discharged by means of a pump P3, while the condensed overhead product m12 which has been condensed in an overhead condenser KR, and which consists of cleaned solvent, is returned into the circulation.

2. Process in accordance with claim 1 which is characterized by the feature that the temperature of the cleaned solvent m12 is adjusted in such a way that, after mixing with the used vegetable oil m0 in the ratio (m0/m12) = 0.5, a temperature of 25 to 30°C will result.

3. Process in accordance with claim 1 which is characterized by the feature that the downdraft evaporator VD is operated at 95°C and 800 mbar (absolute), and the stripping column KE at 90°C sump temperature and 780 mbar (absolute) overhead pressure.

4. Process in accordance with claim 1 which is characterized by the feature that cooling of the first specifically lighter phase m3 in the heat exchanger WT1 and cooling of the specifically heavier phase m4 in the heat exchanger WT2 are effected in the mentioned sequence order across a cooling circuit which is maintained by a mechanical refrigerator.

5. Device for execution of the process in accordance with claim 1, consisting of a collecting tank B1 for the solvent m12 (90% acetone + 10% cyclopentane) .......... and a collecting tank B2 for the used vegetable oil m0, a mixing tank B3 for mixing the solvent with the used vegetable oil, a phase separating tank B4 for the separation of the resulting emulsion m2 into a first specifically lighter phase m3 and a first specifically heavier phase m4, a heat exchanger WT1 for cooling of the first specifically lighter phase m3, a heat exchanger WT2 for cooling of the first specifically heavier phase m4, a phase separating container B5 for separation of a second specifically lighter phase m5 from a second specifically heavier phase m6, a phase separating container B6 for separation of a third specifically lighter phase m7 from a third specifically heavier phase m8, a downdraft evaporator VD for condensing the second specifically heavier phase m6, a heat exchanger WT3 for cooling of the formed product m11, a stripping column KE with evaporator VR and the condenser KR and a pump P3 for expulsion of the saturated fatty acids and impurities m13, with the special feature that the containers B1 and B2 are connected by a pipe union to a line provided for the connection with the mixing container B3, which is connected to two nozzles D1 and D2 over two junctions L1 and L2 and into which a pump P1 for common supply of the solvent and of the used vegetable oil is installed, and that the mixing tank is connected with a line to the phase separating tank B4 by a tangential connection piece S3, the tank B4 being built of a cylindrical part Z for the production of centrifugal forces and a cuboid part Q for the application of gravity, the cuboid part being connected to a heat exchanger WT1 by an upper connection piece S6 and a line, and to a heat exchanger WT2 by a bottom connection piece S7, their outlets for the cooled mass flows m3 and m4 each connected with the phase separating tanks B5 and B6 (of similar design as B4), the top outlets of which discharge into a common line for connection with the heat exchanger WT3, the outlet of which is connected with a stripper column KE by a line into which a pump P2 for transfer of the mass flow m9 resulting from m5 and m7 is installed, while the bottom outlet connection piece of B5 is connected with the downdraft evaporator VD, which is, one the one hand, connected to the stripper column KE by a line for the solvent vapours m10, and, on the other, to the heat exchanger WT3 by a line for the product m11 to be cooled, and that the bottom outlet connection piece of B6 for the transport of the third specifically heavier phase m8 is connected with the stripper column KE, which is connected to the collecting tank B1 for solvent supply via the condenser KR.

6. Device in accordance with claim 5, characterized by the feature that the ratio of container height/container diameter (h1/d1) for the mixing container is equal to 1.5; that the ratio of nozzle distance at the cover/container diameter (b/d1) is equal to 0.75; that the ratio of the distance of the intersection point P of the nozzle axes from liquid surface/nozzle distance (a/b) is equal to 0.25; that the angle between the nozzle axes is equal to 60° and the stationary dwell time is equal to 3 minutes.

7. Device in accordance with claim 6, characterized by the feature that the cross sections of the nozzles D1 and D2 are rated in such a measure that a discharge speed of 15 m/s will result.

8. Device in accordance with claim 5, characterized by the feature that the phase separating tank B4 has a cylindrical part Z with a tangential connection piece S3 and a cuboid part Q with two outlet connection pieces S6 and S7, the cylindrical part provided with two openings S5 (ending with the cover) and S4 (ending with the bottom) for the penetration of a specifically lighter phase (top) and a specifically heavier phase (bottom) from the cylindrical part Z to the cuboid part Q.

9. Device in accordance with claim 8, characterized by the feature that the connection piece S3 is rated for a speed/flow rate of 2 m/s, the openings S4 and S5 for a speed/flow rate of 0.3 m/s, and the cuboid part Q for a dwell time of 10 minutes.

10. Device in accordance with claim 6 characterized by the feature that, for the phase separating tank, the ratio of the distance h3 of the connection piece S3 from the bottom to the distance h2 of the connection piece S3 from the cover (h3/h2) 2 and the ratio of the diameter d2 of the cylindrical part Z to the height of the cylindrical part h2 + h3 [d2/(h2+h3)] is equal to 0.67.

## Revendications

1. Processus pour le retraitement continu des huiles végétales usées, caractérisé de manière suivante:
a) L'huile végétal usée m0 est transportée avec le dissolvant m12, consisté en 90% d'acétone et 10% de cyclopetane en rapport (m0/m12) = 0,5 avec une pompe P 1 par deux buses D1 et D 2, lesquelles produisent des jets libres d'une haute impulsion et en donnant contre la superficie du liquide dans le récipient mélangeur B3 l'huile végétale est entremêlé avec le dissolvant ainsi qu'il se forme une émulsion m2, composée d'une 1ère phase spécifique plus légère, riche en acides gras non saturés et d'une 1ère phase spécifique plus lourde, riche en acides gras saturés et en impuretés;
b) D'abord l'émulsion m2 est séparée dans un récipient de séparation des phases B4 par force centrifuge et après par force de gravité dans la 1ère phase spécifique plus légère m3 et la 2ème phase spécifique plus lourde. La première est refroidie dans l'échangeur de chaleur WT1 à une température d'aprox. 4°C, par laquelle se produit une 2ème phase spécifique plus légère (riche en dissolvants) et une 2ème phase spécifique plus lourde (riche en acides gras non saturés) qui sont séparées dans un récipient de séparation des phases B5 par force centrifuge et force de gravité.
c) La 2ème phase spécifique plus lourde m6 est concentrée par évaporation dans un vaporisateur à tirage par en bas VD en contre-courant au dissolvant m10, expulsé par l'adduction de chaleur, refroidi dans un échangeur de chaleur WT3 et emmené comme produit m11;
d) La 1ère phase spécifique m4 est refroidie dans un échangeur WT2 à 0°C par laquelle se forme une 3ème phase spécifique plus légère (riche en dissolvants) et une 3ème phase spécifique plus lourde (riche en acides gras saturés et en impuretés) qui sont séparées dans un récipient de séparation des phases B6 par force centrifuge et force de gravité;
e) La 2ème phase spécifique plus légère m5 et la 3ème phase spécifique plus légère m7 sont réunies en flux massique m9 et après avoir pris de la chaleur du produit m11 dans l'échangeur de chaleur WT3, introduites à través d'une pompe P2 dans une colonne de rectification KE entre une 1ère garniture PA1 et une 2ème garniture PA2 (compter à partir de la tête de la colonne), pendant que la vapeur du dissolvant m10, expulsé par le vaporisateur à tirage par en bas VD, est introduite entre la 2ème garniture PA2 et une 3ème garniture PA3 et la 3ème phase spécifique plus lourde m8 est introduite entre la 3ème garniture PA3 et une 4ème garniture PA4 dans la colonne KE qui est chauffée par un vaporisateur VR;
f) Le produit de bas de colonne m13 (des acides gras saturés et des impuretés) est aspiré à l'aide d'une pompe P3 pendant que le produit de tête m12, condensé dans un condenseur de tête KR, composé du dissolvant nettoyé, est ramené au circuit.

2. Le processus selon la spécification 1 est caractérisé de manière suivante: la température du dissolvant nettoyé m12 est réglé de telle sorte qu'aprés être intermêlé avec l'huile végétale m0 en relation (m0/m12)=0,5 la température atteint 25 jusqu'à 30°C.

3. Le processus selon la spécification 1 est caractérisé par l'exploitation du vaporisateur à tirage par en bas VD à 95°C et 800 mbar (absolu) et la colonne de rectification KE à température de distillation de 90 °C et 780 mbar (absolu) par pression de tête.

4. Le processus selon la spécification 1 est caractérisé par la réalisation du refroidissement de la 1ère phase plus légère m3 dans l'echangeur de chaleur WT1 et le refroidissement de la 1ère phase plus lourde m4 dans l'echangeur de chaleur WT2 dans l'orde mentionné à travers d'un circuit de réfrigération qui est maintenu par une machine frigorifique.

5. Le dispositf pour la réalisation du processus selon la spécification 1 est composé d'un récipient collecteur B1 pour le dissolvant m12 (90% d'acetone + 10 % de cyclopetane) et d'un récipient collecteur B2 pour l'huile végétal m0, d'un récipient échangeur B3 pour entremêler le dissolvant avec l'huile végétal usée, d'un récipient de séparation des phases B4 pour la séparation de l'émulsion obtenue m2 en une 1ère phase spécifique plus légère m3 et en une 1ère phase spécifique plus lourde m4, d'un échangeur de chaleur WT 1 pour le refroidissement de la 1ère phase spécifique plus légère m3, d'un échangeur de chaleur WT2 pour le refroidissement de la 1ère phase spécifique plus lourde m4, d'un récipient de séparation des phases B5 pour la séparation de la 2ème phase spécifique plus légère m5 d'une 2ème phase spécifique plus lourde m6, d'un récipient de séparation des phases B6 pour la séparation d'une 3ème phase spécifique plus légère m7 d'une 3ème phase spécifique plus lourde m8, d'un vaporisateur à tirage par en bas VD pour la concentration par évaporation de la 2ème phase spécifique plus lourde m6, d'un échangeur de chaleur WT3 pour le refroidissement du produit obtenu m11, d'une colonne de rectification KE avec le vaporisateur VR et le condenseur KR et d'une pompe P3 pour l'élimination des acides gras saturés et les impuretés m13, caractérise par un raccord à tubes entre les récipients B1 et B2, raccordés par une conduite au récipient mélangeur B3. Cette conduite est raccordée par deux déviateurs L1 et L2 aux deux buses D1 et D2 et dans laquelle est installée une pompe P1 pour le transport en comun du dissolvant et de l'huile végetal usée. Le récipient mélangeur est raccordée par une condiute au tuyère tangentiel S3 du récipient de séparation des phases B4 qui est composé d'une partie cylindrique Z pour la production des forces centrifuges et d'une partie quadrique Q pour avoir de l' influence des forces de gravité. La partie quadrique est raccordée par une tuyère supérieure S6 et par une conduite à l'echangeur de chaleur WT1 et par une tuyère inférieure S7 à l'echangeur de chaleur WT2 dont leurs sorties pour les flux massiques refroidis m3 et m4 sont raccordées chacune aux récipients de séparation des phases B5 et B6 (semblable à la réalisation B4). Leurs tuyères de sortie supérieures débouchent dans une conduite commune vers le raccordmement à l'echangeur de chaleur WT3 dont son sortie est raccordée par une conduite où est installée une pompe P2 pour le transport du flux massique m9, resulté de m5 et m7, à une colonne de rectification KE, pendant que la tuyère inférieure de sortie de B5 est raccordée au vaporisateur à tirage par en bas VD qui est d'une part raccordé par une conduite pour la vapeur du dissolvant m10 à la colonne de rectification KE et d'autre part par une conduite pour le produit à refroidir m11 à l'echangeur de chaleur WT 3. Pour le transport de la 3ème phase spécifique plus lourde m8 la tuyère de partie inférieure de B6 est reliée à la colonne de rectification KE qui est raccordée par le condenseur KR au récipient collecteur B1 pour le stockage du dissolvant.

6. Le dispositif selon la spécification 5 a les caractéristiques suivantes: pour le récipient mélangeur B3 le rapport de la hauteur au diamètre du récipient (h1/d1) s'élève à 1,5; le rapport de la distance des buses au couvercle/diamètre du récipient (b/d1) s'élève à 0,75; le rapport de la distance du point d'intersection P des axes de buses à la superficie du liquide/distance des buses (a/b) s'élève à 0,25, l'angle entre les axes de buses s'élève à 60° et le temps de séjour s'élève à 3 minutes.

7. Le dispositif selon la spécification 6 est caractérisé de manière suivante: la section transversale des buses D1 et D2 sont dimensionnés de telle sorte qu'il soit obtenu une vitesse de sortie de 15m/s.

8. Le dispositif selon la spécification 5 est caractérisé par un récipient de séparation des phases B4 qui a une partie cylindrique Z avec une tuyère tangentiel S3 et une partie quadrique Q avec deux tuyères de sortie S6 et S7. Pour la partie cylindrique on a prévu deux embouchures S5 (près du couvercle) et S4 (près du fond) pour le passage d'une phase spécifique plus légère (en haut) et d'une phase spécifique plus lourde (en bas) de la partie cylindrique Z à la partie quadrique Q.

9. Le dispositif selon la spécification 8 est caractérisé par une tuyère S3 dimensionnée pour une vitesse de 2m/s, les embouchures S4 et S5 sont dimensionnées pour une vitesse de 0,3m/s et la partie quadrique Q pour un temps de séjour de 10 minutes.

10. Le dispositif selon la spécification 6 est caractérisé de manière suivante: pour le récipient de séparation des phases B4 le rapport de la distance h3 de la tuyère S3 du fond à la distance h2 de la tuyère S3 du couvercle (h3/h2) s'èlève à 2 et le rapport du diamètre d2 de la partie cylindrique Z à la hauteur de la partie cylindrique s'élève à h2+h3 [d2/(h2+h3)] 0,67.
